# EUROPEAN PATENT SPECIFICATION

(11) **EP 3 114 089 B1**
(45) Date of publication and mention of the grant of the patent: **01.05.2019**
(21) Application number: 15710128.8
(22) Date of filing: 04.03.2015
(51) Int. Cl.: C02F 3/02, C02F 3/00, C02F 1/68, C02F 3/10, C02F 103/06, C02F 103/00, C02F 101/20, C02F 101/16, C02F 103/02, C02F 101/10

(54) **APPARATUS COMPRISING A TRACE ELEMENT DOSAGE DEVICE AND METHOD FOR TREATING RAW WATER IN BIOFILTER**
VORRICHTUNG MIT SPURENELEMENTDOSIERUNGSGERÄT UND VERFAHREN ZUR BEHANDLUNG VON ROHWASSER IN BIOFILTER
APPAREIL COMPRENANT UN DISPOSITIF DE DOSAGE D'OLIGO-ÉLÉMENTS POUR TRAITER DE L'EAU BRUTE DANS UN BIOFILTRE

(30) Priority: 05.03.2014 EP 14157878
(43) Date of publication of application: 11.01.2017
(73) Proprietor: Danmarks Tekniske Universitet, 2800 Kgs. Lyngby (DK); Krüger A/S, 2860 Søborg (DK)
(72) Inventor: ALBRECHTSEN, Hans-Jørgen, DK-2700 Brønshøj (DK); WAGNER, Florian Benedikt, DK-2400 København NV (DK); NIELSEN, Peter Borch, DK-3520 Farum (DK); BOE-HANSEN, Rasmus, DK-3520 Farum (DK); FISCHER, Erling Vincentz, DK-3400 Hillerød (DK)
(74) Representative: Zacco Denmark A/S
(86) International application number: PCT/EP2015/054470
(87) International publication number: WO 2015/132283

(56) References cited:
- EP-A1- 2 105 413
- WO-A1-03/031344
- WO-A1-2012/159632
- US-A1- 2011 076 519
- US-A1- 2013 334 119
- US-B1- 6 458 276

## Description

### Field of the invention

The present invention relates to an apparatus in which raw water is treated through microbial activity where microbial activity is controlled by nutrients and other parameters. Some of the nutrients controlling the microbial activity are trace elements such as certain metals.

An apparatus according to the present application comprises a filter in a fluid flow path having a flow direction from an inlet to an outlet. The filter comprises a porous filter material and biomass. Such a filter is often referred to as a biological filter, a biologically active filter or a bio-filter.

The apparatus comprises a dosage device configured to dose a trace element, and the presence of the trace element influences the activity of a microorganism partly constituting the biomass in the filter. The trace element can be ions or a compound of one of the metals Cu, Co, Cr, Mo, Ni, W and Zn or combinations of ions or compounds of two or more of the metals. Other elements which can be present at a solid state and dosed according to the invention are substances such as phosphates (P), calcium (Ca) and potassium (K).

The present invention also relates to a method for treating raw water by microbial activity.

### Background of the invention

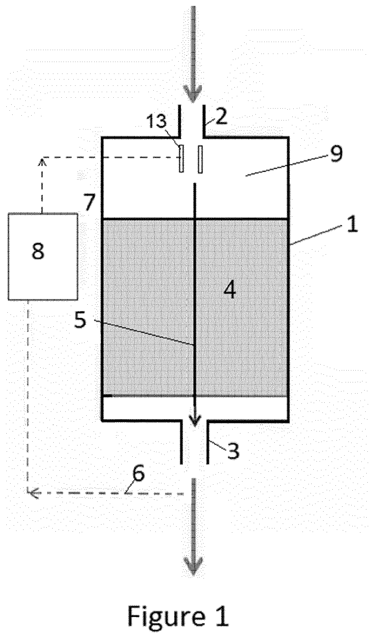

Biological filters in the form of porous filters are used in water works in Denmark, and in many water works throughout the world, to treat groundwater or surface water for drinking water production. The filter material is sand or other porous material, and the filters usually have a layer both retaining particles and containing microorganisms conducting removal processes and a support layer positioned below the active layer (Fig. 1).

Such filters are called monomedia filters. Besides monomedia filters, other types such as dualmedia filters comprising e.g. a layer of sand and a layer of e.g. anthracite, or mixed media filters, exist. Other porous media instead of sand can be granular activated carbon (GAC), expanded clay, limestone, anthracite coal, or other filter materials, i.e. similar particles of natural or human made origin. The filter material (or -bed) can either be submerged or not submerged (as for example in trickling filters).

The depth or thickness of the layer where removal of particles and microbial removal processes take place depends on the raw water composition and in Denmark the depth of this layer is normally around 0.6 m, however the layer might be thicker in other countries having different raw water composition, etc. Generally, depth of a filter can vary between 0.5 and 3.0 m.

A biologically active filter does not only perform physical straining of particles, but more importantly performs a number of biological removal processes conducted by microorganisms such as the following:

**CH₄** + 2 O₂ → CO₂ + 2H₂O

**H₂S** + 2 O₂ → SO₄²⁻ + 2H⁺

**Fe²⁺** + 0.25 O₂ + 2.5 H₂O → Fe(OH)₃ + 2H⁺

**NH₄⁺** + 2 O₂ → NO₃⁻ + H₂O + 2H⁺

**Mn²⁺** + 0.5 O₂ + H₂O → MnO₂ + 2H⁺

**CH₂O** (AOC) + O₂ → CO₂ + H₂O

**Xenobiotics** (e.g. pesticides) + O₂ → CO₂

One of the reactions is called nitrification:

NH₄⁺ + 2 O₂ → NO₃⁻ + H₂O + 2H⁺;

which can be subdivided into:
Ammonia oxidation:

   NH₄⁺+ 1.5 O₂ -> NO₂⁻ + 2 H⁺ + H₂O
Nitrite oxidation:

   NO₂⁻ + 0.5 O₂ -> NO₃⁻

To oxidize NH₄⁺ completely to NO₃⁻, approx. 4.57 mg O₂ are required for 1 mg of NH₄⁺. Furthermore, ammonia and nitrite oxidizing organisms require macronutrients such as phosphorus and certain trace metals (micronutrients), to support microbial growth and activity. Trace metals are required in lower amounts than macronutrients, and with regards to biological water treatment of drinking water, micronutrient concentrations in source water are generally considered high enough to support microbial removal activity.

Trace metals are vital for cellular function. For example, the ammonia monooxygenase enzyme in ammonia oxidizing organisms, carrying out the first of the two steps in the oxidation of NH₄⁺ to NO₂⁻, contains copper (Cu), iron (Fe), and zinc (Zn). Among the trace metals are also other elements, such as nickel (Ni), cobalt (Co), molybdenum (Mo), tungsten (W), chromium (Cr), and boron (B). If nutrients are not available in sufficient quantities, microorganisms are hindered in growth and activity. As a result, nitrification is incomplete, i.e. NH₄⁺ is not completely removed from the source water.

Incomplete NH₄⁺ removal can lead to unwanted nitrification in the distribution system, causing problems such as microbial after growth (potentially pathogenic organisms) and oxygen consumption, likely leading to taste and odour (deterioration of the drinking water quality). Furthermore, it can enhance material corrosion, formation of the toxic nitrite (NO₂⁻), and loss of sufficient disinfectant residual, if disinfection with e.g. chlorine is used. Especially in Denmark, where drinking water disinfection is not used and microbial growth in the distribution system is solely controlled by maintaining low nutrient concentrations, efficient removal of ammonium (NH₄⁻), during drinking water treatment is of great importance for drinking water quality, and consumer safety and health.

Generally, if the concentration of a nutrient for a microorganism is too low, the deficiency of this nutrient can either decrease the growth rate or completely prevent microbial growth. As the nutrient concentration increases, microbial activity may be restored and can reach an optimum level. At very high concentrations the nutrient might again decrease the growth rate and/or activity or completely prevent growth and/or activity (inhibition).

In the article "Nutrients and metals effects on nitrification in drinking water systems", July 2010, American Water Works Association (pages 56-66) by Zhang, Y and Edwards, M.; it is established that the activity of nitrifying bacterial in potable water systems is strongly affected by nutrient levels in the presence of certain metals. Specifically, copper (Cu) and zinc (Zn) levels above 100 µg/L and phosphate levels below 5 µg/L inhibit nitrifier activity. It is suggested that nutrients can appear in the raw water supply or might originate from pipe material and that e.g. iron pipes can release bioavailable phosphorus for bacterial growth (page 57, first col., last paragraph). The article discusses the influence of different macronutrients and trace elements on the growth of nitrifiers but does not illustrate or discuss dosage of nutrient to raw water.

US 5.893.975 describes a wetland for treating waste water including a pre-treatment chamber (4) with nutrient addition, followed by a series of treatment cells (13, 14). In the nutrient addition chamber, nutrients such as Ca, Mg, Cu, Fe, Zn, Mn, B, Mo, and S are released from dissolvable granular or briquette type commercial fertilizers through passive solubilisation (col. 7, lines 30-35). Kinetic energy derived from flowing water and in-situ dissolution of granular fertilizers briquette is used, whereas the dissolution rate can be controlled through product manipulation i.e. water solubility of the selected fertilizer, hydraulic retention time and/or through mechanical and gravitational agitation (col. 8, lines 11-15). US 5.893.975 is not concerned with treatment of drinking water.

WO 2007110051 teaches a method for introducing a nutrient complex into a medium, the medium comprising a microorganism mixture that actively solves the nutrients contained in the complex, introducing them into a medium. The special microorganisms present in the medium are introduced into the medium, whereas the organisms are configured to release the nutrients from the device. I.e. release of nutrients is controlled through microorganisms solving nutrients out of a matrix. The method is directed to treatment of waste water and it would not be an option to introduce bacteria such as the suggested Geobacter or lactic acid bacteria or yeasts into drinking water for matters of consumer acceptance. In addition, WO 2007110051 suggests the nutrient complex to be constituted of carbon, nitrogen, phosphorus and sulphur. It would not be possible to use such nutrient complexes in connection with drinking water as excess nutrient addition would have adverse effects when used in drinking water treatment.

WO 2012159632 relates to a device comprising a porous matrix of sintered water soluble glass particles having pores between the glass particles which comprise a nutrient medium. The device can release nutrients such as iodine, zinc, selenium, iron, magnesium, calcium, vitamins, and folic acid in drinking water. The dissolution rate of the glass determines how fast material/nutrients are released whereas the dissolution rate is typically dependent on temperature, and the ratio between the dissolution rate of the glass and the dissolution rate of the material (page 3, lines 31-32). The nutrients are released into drinking water, to provide nutrients to the consumer for example as part of a portable water filtering device

US 2004/256315 describes a system for treating wastewater including biological media used to aerobically or anaerobically treat solid and liquid waste in water for large and small scale wastewater systems in a way that minimizes the size of the system required to output high quality, environmentally suitable water being depleted of ammonia, nitrites, nitrates, and other contaminants. The system does not provide micronutrients such as Cu or Zn.

US 2006/0000784 discloses a method of water and waste water treatment for removal of pollutants in a process comprising at least two-steps:
(a) treatment of water producing at least partially treated intermediate effluent, step (a) can be a biological, biological-abiotic, physical chemical, or combination of these steps,
(b) treatment of the intermediate effluent with a sacrificial metal and producing ions of said sacrificial metal, and providing very thoroughly treated effluent, step (b) is preferably a spontaneous cementation-driven electrochemical process. The sacrificial metal can be selected from the group comprising iron, nickel, cobalt, zinc, aluminium, copper and combinations thereof,
(c) recuperating sacrificial metal ions generated in the step (b) and recycling the recuperated ions in the step (a).

The recuperated and recycled ions from the step (c) improve treatment efficiency of step (a) by additionally removing pollutants from the intermediate effluent using recuperated ions, resulting in cleaner intermediate effluent, and, therefore, the pollutant loading rate in step (b) is reduced, intermediate effluent is further treated more thoroughly, and the demand for the sacrificial metal in step (b) is reduced. The combination of the steps (a), (b) and (c) produces a synergistic effect resulting in improved removal of said pollutants and in reduced need in said sacrificial metal. Step (b) introduces use of sacrificial metal in an operation placed downstream of step (a) and the released ions primarily engage in chemical reactions.

US 2006/0000784 refers to a method with steps of treatment where an intermediate effluent for recycling is produced. When recycling nutrients it becomes difficult to control the concentration of respective nutrients in the medium, which might cause inhibition of the microorganisms receiving the nutrients.

WO 2003/031344 discloses a water treatment method and apparatus for destroying of pathogen microorganisms in water. According to this method sacrificial electrodes release a biocide into a flow of water relative to the turbidity and the microbial content of the water.

### Summary of the invention

The present invention was made in view of the prior art described above, and the object of the present invention is to provide a dosage device and an improved method of dosing of very low amounts of trace elements to a system comprising a biological filter.

To solve the problem, the present invention provides a method and an apparatus for treating a flow of raw water by microbial activity. The apparatus comprises:
- a volume provided with an inlet for raw water and an outlet for water having been subjected to microbial activity, a biological filter and a trace element dosage device configured to dose a nutrient to microorganisms of the biological filter are placed in this volume:
- the biological filter comprises a filter material including a porous filter material carrying a microbial biomass, the filter material is either stationary relative to the volume or comprises a particulate material, the filter material is inserted in a fluid flow path generated by water flowing in direction from the inlet to the outlet,
- the trace element dosage device is positioned upstream of the porous filter material and microbial biomass and is configured to dose trace element(s) to the water flowing through the filter. Further, the trace element dosage device comprises at least one solid structure of a source of trace element(s) at least partly immersed in the water flowing through the filter or at least in contact with the water flowing through the filter by water continuously overflowing the trace element dosage device and at least one solid source of trace element(s) is an electrode of an electrolysis system, the electrolysis system comprises: 1) a system with one metallic electrode and one non-metallic electrode such as a carbon electrode, or 2) a system with two or more metallic electrodes and two or more non-metallic electrodes or 3) a system with one or more pairs of metallic electrodes, further the apparatus comprises a measuring device arranged in the flow path measuring a parameter corresponding to the content of one or more trace elements or to microbial activity which measuring device provides values of the parameter before and/or after the filter.

"A volume" is understood to extend from the trace element dosage device to the filter material, this volume might extend beyond the physical compartment including the filter material. E.g. if the trace element dosage device is placed in a compartment/room or pipeline placed separate from the compartment housing the filter material then the "volume" include both compartments.

The trace element dosage device can comprise at least one solid structure of a source of trace element(s) at least partly immersed in the water flowing through the filter or at least in contact with the water flowing through the filter e.g. by the water continuously overflowing the trace element dosage device.

The trace element(s) are released from the source of trace element(s) due to contact between the flowing water and the source of trace due to electrolysis. According to a group of embodiments at least one solid source of trace element(s) is an electrode of an electrolysis system. In periods with low consumption or in systems with low consumption, the amount of trace elements released from the solid structure simply as a result of the contact between the solid structure and the flowing water will be adequate to fulfill the needs of the microorganisms. In periods or in systems with high or higher consumption it might be necessary to release trace elements in form of ions to the flowing water in an active way by applying a current to the solid structure. According to this embodiment, a system can be adapted both to constant and to highly varying conditions.

According to a group of embodiments at least two solid sources of trace element(s) are electrodes of an electrolysis system. When at least two electrodes are made of trace element sources, it is possible to reverse the current while constantly releasing ions from the electrodes. Reversing the current might prevent coating and/or chaotic corrosion of the electrodes which are acting as sources for trace element(s).

According to a group of embodiments the metallic electrode(s) is constituted of Cu and/or Zn or an alloy comprising both Cu and Zn e.g. brass or bronze.

In some embodiments of the present invention the dosage device (13) is positioned upstream in a flow direction obtained during restoration or backwashing of the filter (1). According to this embodiment the dosing of trace elements does not take place during actual treatment of the raw water but during periods of backwashing of the biologically active filter.

In some embodiments of the present invention the source of trace element is a metal or an alloy made of metals. Alternatively, other solids sources such as e.g. silicon embedded with trace nutrients can be used; the trace nutrients are then slowly released from the solid source. Also, the source could comprise a solution placed behind a dialysis membrane wherefrom slow release of the nutrients could take place through the membrane.

The source is defined by the needs of the microorganisms removing an unwanted component from the raw water. For microorganisms removing ammonium from the raw water by microbial nitrification it is recognized that they can improve performance by increasing the amount of Cu in the water. In some embodiments of the present invention the dosage device is configured to dose the trace element(s) so that the content upstream of the filter (1) or downstream of the filter (1) is in the range of 0.005 - 500 µg Cu per liter, alternatively 0.05 - 100 µg Cu per liter, and/or 0.005 - 25 µg Co per liter, alternatively 0.05 - 10 µg Co per liter, and/or 0.005 - 100 µg Cr per liter, alternatively 0.05 - 20 µg Cr per liter, and/or 0.005 - 100 µg Mo per liter, alternatively 0.05 - 20 µg Mo per liter, and/or 0.005 - 100 µg Ni per liter, alternatively 0.05 - 10 µg Ni per liter, and/or 0.005 - 25 µg W per liter, alternatively 0.05-20 µg W per liter, and/or 0.005 - 500 µg Zn per liter, alternatively 0.05 - 100 µg Zn per liter.

The ranges are determined by a lower limit defining a minimum needed to increase or maintain microbial activity, whereas the upper limit is defined by the maximum allowable contents of a given trace element in the treated water, and/or by a maximum concentration which would cause inhibition of microbial activity when further increased.

The apparatus comprises a measuring device arranged in the flow path measuring a parameter corresponding to the content of one or more trace elements or to microbial activity which measuring device provides values of the parameter before and/or after the filter.

According to some embodiments the parameter is the content of oxygen or the content of a component to be removed by the microorganisms such as ammonium.

In some embodiments of the present invention the dosage device is configured to deliver either a continuous dosage or a discontinuous dosage of a given trace element or of a combination of trace elements.

In some embodiments of the present invention the apparatus comprises an aeration unit increasing oxygen content of the water either before or inside of the biologically active filter (1).

The invention also provides a method for treating raw water by microbial activity comprising the following steps:
- providing a biological filter in contact with a flow of water extending between an inlet (2) and an outlet (3), the biological filter comprising a porous filter material carrying biomass (4);
- providing a trace element dosage device configured to dose a nutrient to microorganisms of the biological filter in the form of a solid structure immersed in the water or overflown by the water, the dosage device being configured to dose a metal trace element e.g. Cu or Co or Cr or Mo or Ni or W or Zn or a combination of these elements to the water upstream of the filter material (4).

In some embodiments of the present invention a value of a parameter representing the amount of trace element(s) in the water of the fluid flow path is measured and the value is used to adapt the dosing of trace element(s). According to some of these embodiments, the value of the parameter is measured in the fluid flow path either before the filter material or after the filter material.

The invention is defined by the appended claims.

### Definition of words and expressions

"Raw water" is the water which is to be treated in a flow through filter. The raw water might have been subjected to pre-treatment such as e.g. aeration or mechanical filtration before passing into the apparatus or process of the present invention.

"Passive dosage" or "passive dosing" means that dosage or dosing takes place without any energy specifically being used on the act of dosing. Normally, passive dosage is due to a passing flow of fluid or a suspension to which flow the dosed nutrient is released, the contact or friction between nutrient and fluid/suspension releases the nutrient into the flow.

"Microbial" means that it relates to microorganisms. Microorganisms are very diverse; they include all of the prokaryotes, namely the bacteria and archaea; and various forms of eukaryotes, comprising the protozoa, fungi, algae, microscopic plants (green algae), and animals such as rotifers and planarians. Some microbiologists also classify viruses as microorganisms, but others consider these as non-living. Microorganisms used in filters according to the present invention provide a function such as nitrification, oxidation, decomposition of specific compounds etc. (E.g. removal of compounds listed in equations on page 2).

"Upstream" - in the direction against a stream's current.

### Brief description of the drawings

Figure 1 illustrates a filter according to the invention.
Figure 2 shows an example of a filter material particle of a filter according to the invention.
Figure 3 shows a possible position and design of a trace metal dosage device according to the invention.
Figure 4 illustrates filter effluent NH₄⁺ concentrations of a full-scale filter (round, white markers) after addition of Cu.
Figure 5 illustrates the correlation between current and release of Cu in an experimental system for a given set of electrodes.
Figure 6 shows an overview of the process steps of two treatment lines of a water works, where Cu was added to full-scale filters.

### Detailed description of the invention

The invention relates to an apparatus for treating raw water by subjecting the raw water to microbial activity. Generally, an apparatus according to the invention will work in a process where a continuous flow of water enters a water-holding volume through an inlet i.e. the apparatus can treat a continuous flow of raw water. The apparatus comprises at least one filter but can comprise two or more filters positioned either in a parallel construction or in a consecutive construction or both i.e. same flow of water might pass through a consecutive number of filters and/or different flows of water might pass simultaneously through each their filter. Each filter can be provided with a dosage device of trace elements and two or more filters can be provided with a common dosage device of trace elements.

If a filter 1 is occasionally flushed with water e.g. in order to clean the filter by backwashing meaning that water is forced through the filter in a direction opposite or different from the normal flow direction during treatment, it is possible to position a trace element dosage device upstream of the porous filter material and biomass in the backwash flow direction. In this case "upstream" relates to the flow direction of the backwash water and not to the flow direction of water to be treated. In this case trace element(s) will only be dosed to the filter in periods of backwashing; this will often be desirable in systems where the need for trace element(s) is relatively low. The raw water used for backwashing will normally be clean water e.g. the water might have been previously treated in the apparatus.

Figure 1 shows an embodiment of an apparatus for continuous water treatment according to the invention. The shown embodiment of the apparatus illustrates the general flow through an apparatus according to the invention. The apparatus comprises walls defining a rectangular volume 1, the rectangular volume 1 is provided with an inlet 2 for raw water and an outlet for treated water. A filter material 4 carrying a biomass is inserted in the volume 1 and traversed by the flow of water to be treated. According to this embodiment all water entering through the inlet 2 is passed through the filter material 4. A fluid flow path is defined between the inlet 2 for raw water i.e. influent and the outlet 3 for filtrated water i.e. effluent. An arrow 5 indicates the general direction of the flow during treatment. Downstream of the inlet 2 is a first volume 9 which normally is characterised as a mixed flow volume where the water is relatively turbulent and throughout which volume 9, the water can be considered to have the same composition, the volume 9 might include features for distributing the water equally through the volume of filter material. Further downstream is the volume 4 of filter material which is more similar to a plug flow volume where the composition of the water is considered to vary in the direction of the flow.

The depth or thickness of the layer of filter material 4, i.e. the length or dimension the water will have to pass through the filter material, is normally at least 0.5 m, but the actual depth of the filter material will depend on the origin of the raw water, the amount of water to be treated and the combination i.e. relative positioning and numbers of filters used in a given apparatus.

The volume 4 of filter material comprises a solid porous material which can either be stationary relative to the walls of the filter 1 or can comprise particulate material such as sand or pellets which can move relative to the walls of the filter 1. The solid porous material is at least partly covered with biomass originating from microbial activity. The porous filter material may comprise particles having an effective size in the range of diameter d = 0.4 - 4 mm. The particles may be quartz sand, granular activated carbon (GAC), expanded clay, limestone, anthracite coal, or other filter materials, i.e. similar particles of natural or human made origin.

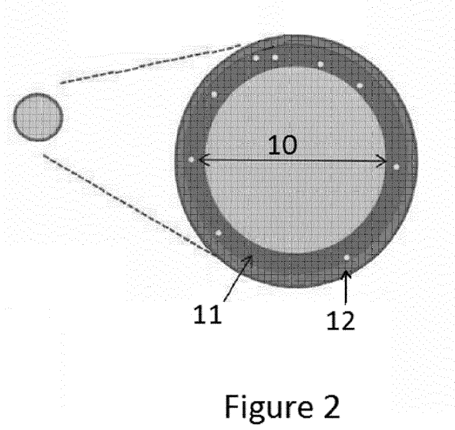

Figure 2 illustrates a single particle of solid particular material being part of the porous filter material. The effective size of the solid particle is illustrated by a double arrow 10 and this solid particle is surrounded by a layer of biomass 11 i.e. a biofilm constituted by microorganisms. During treatments of groundwater, the biofilm is normally part of a layer of iron hydroxides and/or inorganic and organic constituents, such as Mn, Ca and Mg, and organic constituents in which the biomass/microorganisms is/are situated. During treatments of surface water which has a lower content of minerals, the biofilm will just grow directly on the surface of the solid particles. A water film 12 surrounds the biofilm.

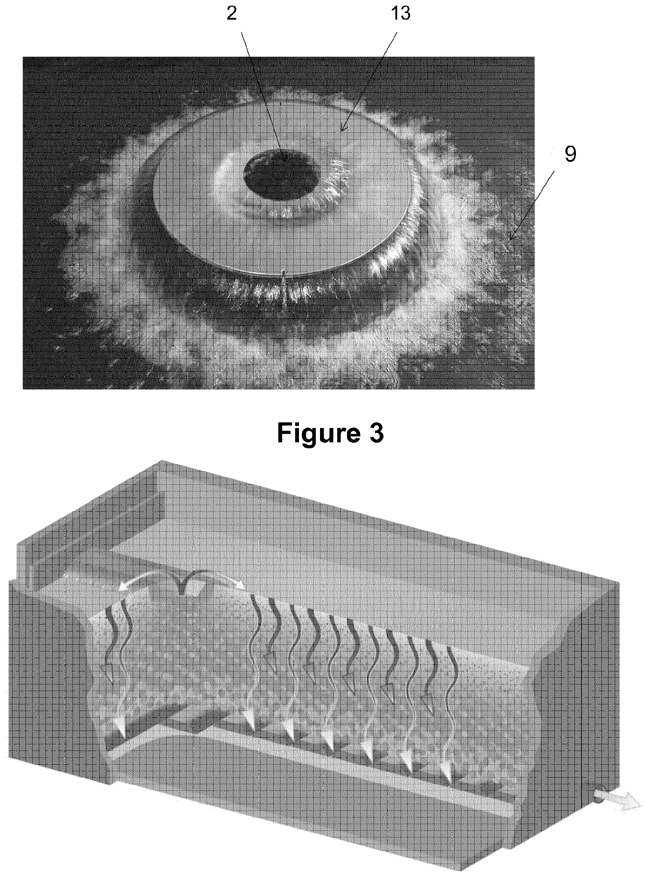

Figure 3 is a picture of an inlet of a biological filter in a water works in operation. The raw water is entering through the inlet 2 for raw water which is an opening in an upright pipe. The water flows from the inlet 2 in a radial direction over a dosage device 13 in the form of a round plate made of copper into the first volume 9. As the water passes into the first volume 9 and gets in touch with the dosage device, the raw water is enriched with Cu ions, due to the very turbulent flow in the first volume all water flowing from the first volume 9 and into the filter material 4 will have approximately the same concentration of Cu-ions as it passes through the biologically active filter. It was decided to position the dosage device 13 in the proximity of the inlet 2 in this embodiment of the filter, as the turbulence of the flow made it likely that a suitable amount of metal-ions would be carried away with the flow. If the dosage device is placed in surroundings with little or no turbulence, it is assumed that a higher amount of Cu-ions might be released to a smaller amount of water which makes the actual concentration of Cu-ions in the water passing through the filter material less predictable. Possibly, the release of ions will be lower according to equilibrium obtained between the submersed dosage device and the surrounding water. Positioning a dosage device 13 close to the inlet 2 reduces the need for active stirring of the flow in the volume 9, as the flow through the inlet 2 will assure even distribution of the trace elements in the water entering the porous filter material and biomass 4.

The picture below fig. 3 shows a biofilter where an inlet as shown in fig. 3 can be used. In this shown filter the raw water enters at an upper free surface where from the raw water is distributed over the upper surface of the filter material and the water then flows vertically downwards towards the bottom of the apparatus. From the bottom or lower part of the apparatus, the treated water is led to side ward outlet in the wall of the apparatus. This flow structure is generally used in filters having a filter material of particulate material such as sand or pellets.

To avoid clogging of the filter e.g. due to biofilm growth and accumulation of different impurities such as particles, and thus avoid decreased efficiency, a filter may comprise a backwash structure for reversing the flow direction of the filter.

The apparatus comprises a trace element dosage device positioned upstream of volume 4 of filter material which dosage device is configured to dose one or more nutrients in the form of trace element(s) to the flow of water flowing through the filter material. The release of trace element(s) from the dosing device normally takes place in the volume 9 of mixed flow upstream of the filter material. The trace elements dosage device may also be positioned downstream of the filter material in a backwash system, the word "downstream" in this context is to be understood as a position relating to the flow of water being subjected to treatment, not to the direction of flow of water used during backwash. In this situation, the trace elements are released into the backwash water and transferred to the biomass in the filter during the backwash procedure.

The trace element dosage device can comprise one or more solid structures of a source of trace element(s) being at least partly immersed in the turbulent flow of raw water in the mixed flow volume 9 before the filter or e.g. in a backwash system after the filter.

Normally, the trace element dosing device is able to release metals such as copper (Cu), cobalt (Co), chromium (Cr), molybdenum (Mo), nickel (Ni), tungsten (W), or zinc (Zn), or possibly a combination of these metals into the water.

The trace elements can be released from the source in a passive way i.e. no energy will be added to the source in order to release a desired amount of trace element. In a simple form trace element(s) are released from the source of the trace element(s) due to contact between the flowing turbulent water and the source of trace element(s). Such an embodiment will be preferred in systems with a relatively constant requirement or consumption of a trace element or group of trace elements.

According to this embodiment the amount of released trace element is determined by the type and size of the surface of the source of trace element and the turbulence and amount of water being in contact with the source of trace element(s).

The amount of released trace element can be increased by e.g. increasing turbulence of the raw water around the source, increasing the contact area between the source and the water, increasing the temperature of the source or alternatively by electrolysis i.e. by using direct electric current to drive the release of metallic trace element(s).

Generally, the present invention relates to embodiments comprising one or more solid structures of trace element(s), each solid structure can comprise one or more trace element(s) in the form of alloys or other physical combinations of metals. All solid structures might be electrodes in an electrolysis system or all solid structures might be intended for passive dosage i.e. no electric current is connected to the solid structure(s). Also, one or more solid structures in a system might be electrodes in an electrolysis system while one or more solid structures in the same system might be intended for passive dosage.

### Electrolysis

In case the system has a high or more varying requirement or consumption, it is possible to provide one or more solid sources of trace element(s) which might function as electrode either in intervals or continuously.

Generally, when micronutrients are dissolved in water by electrolysis, two electrodes are immersed in water through which an electric current is running. The anode is the positively charged electrode from which the current is delivered to the liquid and, therefore, the electrode which removes electrons from the system. Material in the anode electrode surface, as for example copper, is released from the anode electrode in the form of ions. These ions will migrate toward the negatively charged electrode known as the cathode, where they, if they are allowed to, will precipitate.

The two electrodes are placed in a flow of water, so that the ions which are moving from the anode toward the cathode are flushed away before reaching the cathode. In this manner the anode material is dissolved controlled by the electric current between the two electrodes. Different systems of electrodes might be applied, e.g. 1) a system with one metallic electrode and one non-metallic electrode such as a carbon electrode, 2) a system with two or more metallic electrodes and two or more non-metallic electrodes or 3) a system with one or more pairs of metallic electrodes. The current between the electrodes can be controlled in terms of current, voltage and polarity including level and changing intervals for these. The electrodes need not to be located in a constant liquid flow; they can be placed in a volume with more stagnant liquid which is replaced with intervals.

When the electrolysis process is carried out in common water, deposits will build up on both the anode and cathode. These coatings can be described not only by the deposition of material on the electrodes, but rather by the voltage gradient that attracts charged particles in the liquid to the electrodes of opposite polarity. The charged particles might no longer just be simple ions, but also more complex structures of larger charged particles, including organic structures. The electrode potential collects the charged particles thereby enabling that some can be precipitated in a more or less solid form. Coatings of this kind can reduce the electrolytic solution of the required anode material.

The above tendency to coat the electrodes with unwanted material can be avoided by reversing the polarity of the electrodes. Up-concentrated particles moving towards a preferred electrode suddenly become repulsed by the same and they will then on their way toward the opposite electrode be led away by the water flow. If the original cathode i.e. the electrode which was cathode before reversing the current, is having a surface composed of a material which is also desired to be dissolved in the water, then release of these ions will take place now, when this electrode is changed to an anode. The simplest case will be when the electrodes consist of the same material, for example copper.

In systems 2) and 3) it is possible to reverse the current of the electrodes while still obtaining a constant release of metallic ions into the flowing water. Reversing the current might not only prevent coating of the metallic electrode(s) but might also prevent chaotic corrosion of the metallic electrode(s). Both coating and chaotic corrosion can result in unexpected decrease or unpredictable variations in release of ions.

The current can optionally be controlled by a feedback mechanism e.g. by a signal depending on the concentration of O₂ in the effluent water of the filtration unit. Approx. 4.57 mg O₂ are required for oxidation of 1 mg of NH₄⁺. Therefore, when the O₂ effluent concentration becomes higher than a predefined level (higher than what should theoretically be used for full oxidation of influent ammonium), a signal would increase the current of the electrolysis system, thereby causing increased release of trace metals, in turn leading to increased oxidation of ammonium.

The release of Cu to water is examined in the following experiment:

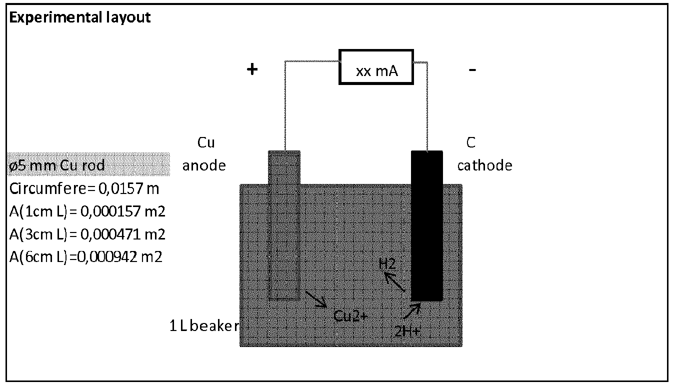

Three different anodes are used, all three are rods having a diameter = 5 mm and a circumference = 0.0157 m. Different lengths of anodes are dipped into still water i.e. the water is not passing the electrodes in a flow:
1) Length = 1 cm, Surface area = 0.000157 m²
2) Length = 3 cm, Surface area = 0.000471 m²
1) Length = 6 cm, Surface area = 0.000942 m²

The obtained release of copper to the water is shown in table 1. The experimental system comprises a beaker with 1 liter of tap water and a Copper-electrode and a Carbon-electrode. The measured voltage without water over electrodes is 12 V, and with water over electrodes the measured voltage is 1.2 V with 0.1 mA current. Resistance for the C-electrode is 30 ohm. The time for which current is added is varied from 30 to 120 minutes according to second column, the surface area of the Cu-electrode is varied according to the third column and the current is varied according to the fourth column.

**Table 1- Copper (Cu) released to water for conducted experiments**

| Experiment | Time | Cu electrode | Current | Cu | |
|---|---|---|---|---|---|
| ID | min | in water, cm | mA | Water concentration ug/l, | Release rate ug/l/min |
| 0 | 0 | 0 | 0 | < 0,04 | 0 |
| 1 | 30 | 1 | 0.1 | 46 | 1.5 |
| 2 | 30 | 3 | 0.1 | 39 | 1.3 |
| 3 | 30 | 6 | 0.1 | 36 | 1.2 |
| 4 | 30 | 3 | 0.2 | 95 | 3.2 |
| 5 | 30 | 3 | 0.4 | 260 | 8.7 |
| 6 | 60 | 3 | 0.1 | 46 | 0.8 |
| 7 | 120 | 3 | 0.1 | 130 | 1.1 |

The results of total released Cu and Cu released per minute is listed in fifth and sixth column. Experiment 0 is a measurement of the Cu content in the water without electrodes being present in the water.

Experiment 1, 2 and 3 illustrates that the size of the surface area of the electrode in contact with water has only small effect on the release of Cu to the water.

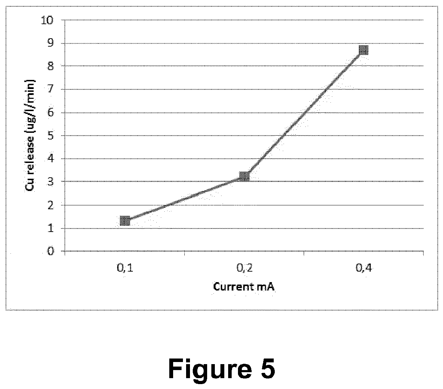

Experiment 2, 4 and 5 illustrates that increasing current will result in increasing release of Cu. This result is illustrated in fig. 5.

Experiment 2, 6 and 7 illustrates that increasing time will increase release of Cu.

The present experiment is conducted for one copper electrode. It is expected that electrodes of other metals will act in a similar way during electrolysis. It might be necessary to establish individual correlations between current and release of trace element for a given system as illustrated in fig. 5 in order to obtain optimized release of trace element.

### Process control

Figure 1 illustrates how a controller 8 receives an input from a signal line 6. The input is compared to a reference value and then the controller can send an input to the trace element dosage device 13 via the signal line 7.

Generally, the invention provides a method for treating raw water comprising at least one step including microbial activity. The method comprising the steps of:
- providing a filter which is passed by water in a flow from an inlet to an outlet, the filter comprising a porous filter material and biomass;
- providing a trace element dosage in the flowing water upstream of the porous filter material, the dosage device being configured to dose one or more/a combination of trace elements to the water;
- providing a trace element(s) content signal representing the amount of trace element(s) or the microbial activity after or just before the porous filter material;
- dosing a trace element(s) to the water based on the content signal.

A process taking place in an apparatus according to the invention will normally comprise the following steps:
1) Aeration of raw water.
   The raw water might be ground water, spring water or surface water for drinking water production or the raw water might be process water used for industrial purposes or waste water to be cleaned before re-entering environment.
2) Pre-filtering
   Pre-filtering might remove solid particles or precipitating substances, the kind of particles or compounds which need to be removed will depend on the source of water, if it is drinking water, particles such as iron compounds might need to be removed.
3) One or more steps of filtering with biologically active filters where one or more of the biologically active filters are provided with a trace element dosage device.

In these filters biodegradable compounds are removed from the water. The exact number of filters and content of biomass will depend on what kind of raw water is entering the apparatus.

As trace elements in large amounts can result in a decrease of microbial or biological activity, it is suitable to have a control of the content of a trace element in order to optimize the microbial process and in order to secure an adequately low level of a potentially toxic component before the treated water re-enters the environment or becomes distributed as drinking water. Also, there is regulation defining maximum permissible values for most trace elements both in drinking water and in water entering the environment (In Denmark defined by *Miljøministeriet (Danish Ministry of Environment))* e.g. in Bekendtgørelse om vandkvalitet, bilag 1b no. 292: Max limit at entrance to consumer's property for Cu: 100 µg/L, Zn: 100 µg/L, Ni: 20 µg/L.

A measurement of a trace element after the microbial process step may be generated manually or automatically based on a measurement of the content or on the level of microbial activity in the treated water after the filter outlet or immediately after addition before the filter material. According to one embodiment, a water sample is collected manually and the trace element content is determined in this sample or the measurement may be done automatically by an apparatus. The determined value may be used to dose the needed trace element(s) to the water.

Dependent on the use of the water after treatment, it may be an advantage if the trace element content does not exceed a predetermined maximum level. This maximum level may be based on different regulations. Thus, the dosage device may be configured to dose the trace element(s) so that the content at the filter inlet or outlet is in the range of 0.005 - 500 µg Cu per liter, and/or 0.005 - 25 µg Co per liter, and/or 0.005 - 100 µg Cr per liter, and/or 0.005 - 100 µg Mo per liter, and/or 0.005 - 100 µg Ni per liter, and/or 0.005 - 25 µg W per liter, and/or 0.005 - 500 µg Zn per liter.

The dosage device may be configured for continuous dosing of trace element(s) in response to the content signal either in a feedback or a feedforward regulation, so that the dosage is continuously adapted in response to the signal.

### Examples

### Full size water works - Background

The description relates to a full size water works in eastern Denmark. The water works was renovated in 2005/2006, where filter material of the secondary filters (afterfilters) was replaced. The renovated east line started production in December 2005 and the renovated west line started production in September 2006. Since then, the water works had problems with insufficient nitrification in their filters and subsequently problems with meeting the NH₄⁺ guideline of 0.05 mg NH₄⁺/L (or as ammonium-nitrogen: 0.039 mg NH₄-N/L value according to *Miljøministeriet (Danish Ministry of Environment), 2011, BEK nr 1024, 31*/*10*/*2011).* Under normal operation, each of the two lines treats 90 m³/h of water on average, and the total maximum design capacity of the two lines of the water works is 350 m³/h of water.

The process of the water works illustrated in table 1 comprises:
1) Aeration of the raw water in two separate lines
2) Pre-filtering in a biological sand filter where the main purpose is removal of iron
3) Secondary filtration in four after filters of the type biological rapid sand filters, where the filters EF1 and EF2 are positioned in parallel in line 1 and the filters EF3 and EF4 are positioned parallel in line 2.
4) Treated water is passed to water tanks for clean water wherefrom it is distributed to consumers.

The raw water is anaerobic groundwater and the treated water is drinking water.

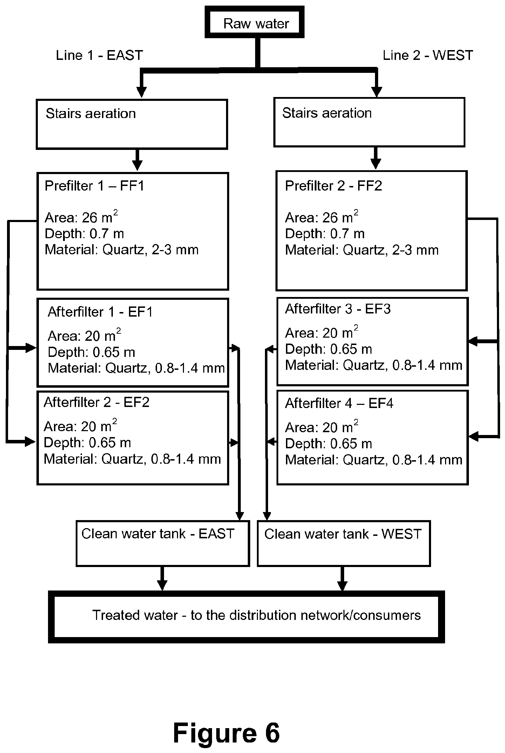

Figure 6 shows an overview of the process steps of the two treatment lines of the water works. Long series of measurements show that nitrification in the after filters of the water works is incomplete.

Table 2 gives an overview for concentrations of selected species. Effluent NH₄⁺ concentrations before addition of the Cu-plate in the influent to the after filters were ranging at around 0.29 mg NH₄-N/L.

The value by far exceeds the guideline value of the Danish Environmental Ministry of 0.039 mg NH₄-N/L in effluent water.

**Table 1- Average in- and effluent (out) concentrations of selected species to after filters at water works, before addition of the Cu-plate prototype**

| | Ammonium [mg NH₄-N/L] | | | Phosphate [mg PO₄-P/L] | | Total Iron [mg Fe/L] | |
|---|---|---|---|---|---|---|---|
| | IN | OUT | Removed (%) | IN | OUT | IN | OUT |
| Water concentration | 0.66±0.01 | 0.29±0.03 | 56 | 0.028 | 0.031 | 0.136 | 0.009 |
| Effluent guideline value | 0.039 mg NH₄-N/L | | | 0.150 mg/L total P | | 0.10 mg Fe/L | |

### Investigations at full scale water works

A Cu plate (Size approx. 0.4 m²) was submerged into the water on top of afterfilter EF4 on 18th of October, 2013, i.e. the submerged Cu plate is placed close to the water inlet of afterfilter EF4. At this position the raw water is pumped up through an opening in the Cu plate where after the raw water flows at least partly along the surface of the Cu plate. Placing a Cu plate at this position results in release of Cu ions into the water, and the water subsequently penetrates the filter sand with attached biomass. Prior to addition of the Cu plate, Cu concentrations in the influent to the afterfilter EF4 were measured to be < 0.03 µg Cu/L, and after addition of the Cu plate, an influent Cu concentration of 0.42 µg Cu/L, was measured.

Figure 3 shows a picture of the submerged Cu plate.

Nitrification responded fast to the increased Cu concentrations in the influent water.

Before positioning of the Cu plate in the influent, the effluent NH₄⁺ concentrations from the afterfilter had a stable level of about 0.32 mg NH₄-N/L. After positioning the Cu plate the effluent NH₄⁺ concentrations decreased within a period of approx. 10 days to values below detection limit (< 0.02 mg NH₄-N/L).

Cu was retained in the filter, as effluent water measurements were < 0.03 µg Cu/L.

The conclusion is that the Cu concentrations in the influent water were increased by positioning of the Cu plate in the influent and that the increased Cu concentrations clearly stimulated nitrification in the biological afterfilter.

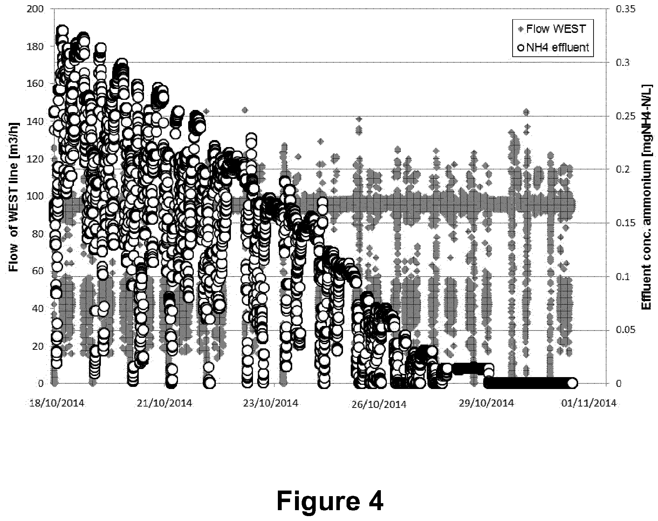

Figure 4 illustrates how the concentration of ammonium decreases in the filter effluent from a full-scale filter after a Cu plate has been positioned upstream of the filter material on 18/10/2013. The second curve (diamond, grey markers) illustrates how the incoming flow of water to the treatment line i.e. the influent of which the respective filter is part of varies.

## Claims

1. Apparatus for treating a flow of raw water by microbial activity, the apparatus comprising
- a volume provided with an inlet (2) for raw water and an outlet (3) for water having been subjected to microbial activity, a biological filter and a trace element dosage device (13) configured to dose a nutrient to microorganisms of the biological filter which are placed in this volume:
- the biological filter comprises a filter material (4) including a porous filter material carrying a microbial biomass, the filter material is either stationary relative to the volume or comprises a particulate material, the filter material (4) is inserted in a fluid flow path generated by water flowing in direction from the inlet (2) to the outlet (3),
- the trace element dosage device (13) is positioned upstream of the porous filter material and microbial biomass and is configured to dose trace element(s) to the water flowing through the filter, **wherein** the trace element dosage device comprises at least one solid structure of a source of trace element(s) at least partly immersed in the water flowing through the filter or at least in contact with the water flowing through the filter by water continuously overflowing the trace element dosage device and at least one solid source of trace element(s) is an electrode of an electrolysis system, the electrolysis system comprises: 1) a system with one metallic electrode and one non-metallic electrode such as a carbon electrode, or 2) a system with two or more metallic electrodes and two or more non-metallic electrodes or 3) a system with one or more pairs of metallic electrodes, further the apparatus comprises a measuring device arranged in the flow path measuring a parameter corresponding to the content of one or more trace elements or to microbial activity which measuring device provides values of the parameter before and/or after the filter.

2. Apparatus according to claim 1, wherein the biological filter comprises sand or other porous material; the biological filters are normally monomedia filters or dualmedia filters comprising e.g. a layer of sand and a layer of e.g. anthracite, or a mixed media filter, or the biological filter comprises other porous media instead of sand such as e.g. granular activated carbon (GAC), expanded clay, limestone, anthracite coal or another filter materials, i.e. similar particles of natural or human made origin, further the filter material or -bed can either be submerged or not submerged.

3. Apparatus according to claim 1 or 2, wherein the contact between the flowing water and the source of trace element(s) causes release of trace element from the trace element source and/or at least one solid source of trace element(s) is an electrode of an electrolysis system.

4. Apparatus according to any of the previous claims, wherein at least two solid sources of trace element(s) are electrodes of an electrolysis system.

5. Apparatus according to any of the previous claims, wherein the metallic electrode(s) is constituted of Cu and/or Zn or an alloy comprising both Cu and Zn e.g. brass or bronze.

6. Apparatus according to any previous claim, wherein the dosage device (13) is positioned upstream in a flow direction obtained during restoring or backwashing of the filter (1).

7. Apparatus according to any previous claim, wherein the source of trace element(s) is a metal or an alloy made of metals e.g. brass or bronze.

8. Apparatus according to any previous claim, wherein the dosage device is configured to dose the trace element(s) so that the content upstream of the filter material (4) or downstream of the filter material (4) is in the range of 0.005 - 500 µg Cu per liter, alternatively 0.05 - 100 µg Cu per liter, and/or 0.005 - 25 µg Co per liter, alternatively 0.05 - 10 µg Co per liter, and/or 0.005 - 100 µg Cr per liter, alternatively 0.05 - 20 µg Cr per liter, and/or 0.005 - 100 µg Mo per liter, alternatively 0.05 - 20 µg Mo per liter, and/or 0.005 - 100 µg Ni per liter, alternatively 0.05 - 10 µg Ni per liter, and/or 0.005 - 25 µg W per liter, alternatively 0.05 - 20 µg W per liter, and/or 0.005 - 500 µg Zn per liter, alternatively 0.05 - 100 µg Zn per liter.

9. Apparatus according to any previous claim, wherein the parameter is the content of oxygen or the content of a component to be removed by the microorganisms such as ammonium.

10. Apparatus according to any previous claim, wherein the dosage device is configured to deliver a continuous dosage or a discontinuous dosage of a given trace element or of a combination of trace elements.

11. Apparatus according to any previous claim, comprising an aeration unit increasing oxygen content of water either before or inside of the filter (1).

12. A method for treating raw water by microbial activity in an apparatus according to any of claims 1-11 comprising the following steps:
- providing a biological filter in contact with a flow of water extending between an inlet (2) and an outlet (3), the biological filter comprising a porous filter material carrying biomass (4);
- providing a trace element dosage device configured to dose a nutrient to microorganisms of the biological filter in the form of a solid structure immersed in the water or overflown by the water, the dosage device being configured to dose a metal trace element e.g. Cu or Co or Cr or Mo or Ni or W or Zn or a combination of these elements to the water upstream of the filter material (4).

13. A method according to claim 12, wherein the dosing of trace element(s) is either continuous or discontinuous.

14. A method according to any of the claims 12 or 13, wherein the amount of trace element(s) released in the water is controlled by electrolysis comprising at least one first electrode constituted of at least one or more trace element(s) and at least one second electrode constituted either of one or more trace element(s) or of a material not releasing ions to the water.

15. A method according to claim 14, wherein
- a parameter corresponding to the content of one or more trace elements is measured before and/or after the filter.

16. A method according to any of the claims 12-14, wherein
- a parameter corresponding to microbial activity is measured after the filter.

17. A method according to claim 16, wherein the parameter is the content of oxygen in the water or the content of a component to be removed by the microorganisms from the water such as ammonium.

18. A method according to any of the claims 15-17, wherein a signal (6) corresponding to one or more measured parameter is provided to a control unit (8) which control unit provides a signal adapting the current/voltage over the electrodes.

19. A method according to any of the claims 12-18, wherein the current to the electrodes is reversed either regularly for pre-set periods or upon indication such as content of oxygen in the water being above a given value.

## Patentansprüche

1. Vorrichtung zur Behandlung einer Strömung von Rohwasser durch mikrobielle Aktivität, welche Vorrichtung Folgendes umfasst
- ein mit einem Einlass (2) für Rohwasser und einem Auslass (3) für Wasser, das mikrobieller Aktivität unterworfen worden ist, versehenes Volumen, ein biologisches Filter und eine Spurenelementdosierungseinrichtung (13), die zum Dosieren eines Nährstoffes zu Mikroorganismen des biologischen Filters, die in diesem Volumen angebracht sind:
- das biologische Filter umfasst ein Filtermaterial (4) enthaltend ein poröses, eine mikrobielle Biomasse tragendes Filtermaterial, das Filtermaterial ist entweder ortsfest zum Volumen oder umfasst ein Partikelmaterial, das Filtermaterial (4) ist in einem Fluidströmungsweg eingeführt, der durch in Richtung vom Einlass (2) zum Auslass (3) strömendes Wasser erzeugt ist,
- die Spurenelementdosierungseinrichtung (13) ist stromaufwärts des porösen Filtermaterials und der mikrobiellen Biomasse positioniert und ist dafür ausgelegt, Spurenelement(e) zum durch das Filter durchströmenden Wasser zu dosieren, **wobei** die Spurenelementdosierungseinrichtung mindestens eine feste Struktur einer Quelle des bzw. der Spurenelementen umfasst, die zumindest teilweise ins durch das Filter durchströmende Wasser eingetaucht ist oder zumindest mit dem durch das Filter durchströmenden Wasser in Kontakt ist, dadurch dass Wasser die Spurenelementdosierungseinrichtung kontinuierlich überflutet und mindestens eine feste Quelle von Spurenelement(en) eine Elektrode eines Elektrolysesystems ist, wobei das Elektrolysesystem Folgendes umfasst: 1) ein System mit einer metallischen Elektrode und einer nicht-metallischen Elektrode wie beispielsweise eine Kohlenstoffelektrode, oder 2) ein System mit zwei oder mehreren metallischen Elektroden und zwei oder mehreren nicht-metallischen Elektroden oder 3) ein System mit einem oder mehreren Paaren von metallischen Elektroden, die Vorrichtung umfasst weiter eine Messeinrichtung, die im Strömungsweg angeordnet ist und einen Parameter misst, der dem Gehalt von einem oder mehreren Spurenelementen oder mikrobieller Aktivität entspricht, welche Messeinrichtung Werte des Parameters vor und/oder nach dem Filter bereitstellt.

2. Vorrichtung nach Anspruch 1, wobei das biologische Filter Sand oder ein anderes poröses Material umfasst; die biologischen Filter sind normalerweise Filter mit einem Medium oder Filter mit zwei Medien umfassend z.B. eine Schicht aus Sand und eine Schicht aus z.B. Anthrazit oder Filter mit gemischten Medien, oder das biologische Filter umfasst andere poröse Medien anstatt Sand wie beispielsweise Aktivkohle in Granulatform (GAC), Blähton, Kalkstein, Anthrazitkohle oder andere Materialien, d.h. ähnliche Partikel aus natürlicher Herkunft oder von Menschen hergestellt, weiter kann das Filtermaterial oder -Bett untergetaucht oder nicht untergetaucht sein.

3. Vorrichtung nach Anspruch 1 oder 2, wobei der Kontakt zwischen dem strömenden Wasser und der Quelle von Spurenelement(en) Freigabe von Spurenelement von der Spurenelementquelle bewirkt und/oder mindestens eine feste Quelle von Spurenelement(en) eine Elektrode eines Elektrolysesystems ist.

4. Vorrichtung nach einem der vorgehenden Ansprüche, wobei mindestens zwei feste Quellen von Spurenelement(en) Elektroden eines Elektrolysesystems sind.

5. Vorrichtung nach einem der vorgehenden Ansprüche, wobei die metallische(n) Elektrode(n) aus Cu und/oder Zn oder einer Legierung umfassend sowohl Cu als auch Zn, z.B. Messing oder Bronze, gebildet ist bzw. sind.

6. Vorrichtung nach einem der vorgehenden Ansprüche, wobei die Dosierungseinrichtung (13) stromaufwärts in einer Strömungsrichtung positioniert ist, die während Wiederherstellung oder Rückspülung des Filters (1) erreicht wird.

7. Vorrichtung nach einem der vorgehenden Ansprüche, wobei die Quelle von Spurenelement(en) ein Metall oder eine Legierung, hergestellt aus Metallen, z.B. Messing oder Bronze, ist.

8. Vorrichtung nach einem der vorgehenden Ansprüche, wobei die Dosierungseinrichtung dafür ausgelegt ist, das bzw. die Spurenelement(e) so zu dosieren, dass der Gehalt stromaufwärts des Filtermaterials (4) oder stromabwärts des Filtermaterials (4) im Bereich von 0,005 - 500 µg Cu pro Liter, alternativ 0,05 -100 µg Cu pro Liter, und/oder 0,005 - 25 µg Co pro Liter, alternativ 0,05 - 10 µg Co pro Liter, und/oder 0,005 - 100 µg Cr pro Liter, alternativ 0,05 - 20 µg Cr pro Liter, und/oder 0,005 - 100 µg Mo pro Liter, alternativ 0,05 - 20 µg Mo pro Liter, und/oder 0,005 - 100 µg Ni pro Liter, alternativ 0,05 - 10 µg Ni pro Liter, und/oder 0,005 - 25 µg W pro Liter, alternativ 0,05 - 20 µg W pro Liter, und/oder 0,005 - 500 µg Zn pro Liter, alternativ 0,05 - 100 µg Zn pro Liter liegt.

9. Vorrichtung nach einem der vorgehenden Ansprüche, wobei der Parameter der Gehalt von Sauerstoff oder der Gehalt einer Komponente, die durch die Mikroorganismen entfernt werden soll, wie beispielsweise Ammonium, ist.

10. Vorrichtung nach einem der vorgehenden Ansprüche, wobei die Dosierungseinrichtung dafür eingerichtet ist, eine kontinuierliche Dosis oder eine diskontinuierliche Dosis eines gegebenen Spurenelements oder einer Kombination von Spurenelementen abzugeben.

11. Vorrichtung nach einem der vorgehenden Ansprüche, umfassend eine Belüftungseinheit, die den Sauerstoffgehalt des Wassers entweder vor oder in dem Filter (1) erhöht.

12. Verfahren zur Behandlung von Rohwasser durch mikrobielle Aktivität in einer Vorrichtung nach einem der Ansprüche 1-11 umfassend die folgenden Schritte:
- Bereitstellen eines biologischen Filters, das mit einer Wasserströmung, die sich zwischen einem Einlass (2) und einem Auslass (3) erstreckt, in Kontakt ist, wobei das biologische Filter ein poröses Filtermaterial, das Biomasse (4) trägt, umfasst;
- Bereitstellen einer Spurenelementdosierungseinrichtung, die dafür eingerichtet ist, einen Nährstoff zu Mikroorganismen des biologischen Filters in Form einer festen Struktur, die im Wasser eingetaucht ist oder durch das Wasser überflutet wird, zu dosieren, wobei die Dosierungseinrichtung dafür eingerichtet ist, ein Metallspurenelement z.B. Cu oder Co oder Cr oder Mo oder Ni oder W oder Zn oder eine Kombination von diesen Elementen zum Wasser stromaufwärts des Filtermaterials (4) zu dosieren.

13. Verfahren nach Anspruch 12, wobei die Dosierung von Spurenelement(en) entweder kontinuierlich oder diskontinuierlich ist.

14. Verfahren nach einem der Ansprüche 12 oder 13, wobei die Menge an Spurenelement(e), das bzw. die im Wasser freigegeben wird bzw. werden, durch Elektrolyse gesteuert wird, umfassend mindestens eine erste Elektrode, gebildet aus einem oder mehreren Spurenelement(en), und mindestens eine zweite Elektrode, gebildet aus entweder einem oder mehreren Spurenelement(en) oder einem Material, das keine Ionen im Wasser freigibt.

15. Verfahren nach Anspruch 14, wobei
- ein Parameter entsprechend dem Gehalt von einem oder mehreren Spurenelementen vor und/oder nach dem Filter gemessen wird.

16. Verfahren nach einem der Ansprüche 12-14, wobei
- ein Parameter entsprechend mikrobieller Aktivität nach dem Filter gemessen wird.

17. Verfahren nach Anspruch 16, wobei der Parameter der Gehalt von Sauerstoff im Wasser oder der Gehalt einer Komponente, die durch die Mikroorganismen vom Wasser entfernt werden soll, wie beispielsweise Ammonium, ist.

18. Verfahren nach einem der Ansprüche 15-17, wobei ein Signal (6) entsprechend einem oder mehreren gemessenen Parametern für eine Steuereinheit (8) bereitgestellt wird, welche Steuereinheit ein Signal, anpassend Strom/Spannung über die Elektroden bereitstellt.

19. Verfahren nach einem der Ansprüche 12-18, wobei der Strom zu den Elektroden entweder regelmäßig für vorgegebene Zeiträume oder bei Indikation wie beispielsweise, dass der Sauerstoffgehalt im Wasser oberhalb eines gegebenen Werts ist, umgedreht wird.

## Revendications

1. Dispositif de traitement d'un flux d'eau brute par une activité microbienne, le dispositif comprenant
- un volume pourvu d'une entrée (2) pour l'eau brute et d'une sortie (3) pour l'eau ayant été soumise à l'activité microbienne, un biofiltre et un dispositif de dosage d'oligo-éléments (13) configuré pour doser un nutriment à des micro-organismes du biofiltre qui sont placés dans ce volume :
- le biofiltre comprend un matériau filtrant (4) comprenant un matériau filtrant poreux portant une biomasse microbienne, le matériau filtrant étant soit stationnaire par rapport au volume soit comprenant un matériau particulaire, le matériau filtrant (4) est inséré dans un trajet d'écoulement de fluide généré par l'eau s'écoulant dans le sens allant de l'entrée (2) à la sortie (3),
- le dispositif de dosage d'oligo-éléments (13) est placé en amont du matériau filtrant poreux et de la biomasse microbienne et est configuré pour doser un ou plusieurs oligo-éléments dans l'eau traversant le filtre,
**dans lequel** le dispositif de dosage d'oligo-éléments comprend au moins une structure solide d'une source d'oligo-élément(s) au moins partiellement immergée dans l'eau traversant le filtre ou au moins en contact avec l'eau traversant le filtre par l'eau débordant continuellement du dispositif de dosage d'oligo-éléments, et au moins une structure solide d'une source d'oligo-élément(s) est une électrode d'un système d'électrolyse,
le système d'électrolyse comprend : 1) un système avec une électrode métallique et une électrode non métallique telle qu'une électrode de carbone,
ou 2) un système avec deux électrodes métalliques ou plus et deux ou plus électrodes non métalliques
ou 3) un système avec une ou plusieurs paires d'électrodes métalliques, en outre le dispositif comprend un dispositif de mesure arrangé dans le trajet d'écoulement pour mesurer un paramètre correspondant au contenu de l'un ou de plusieurs oligo-éléments ou à l'activité microbienne, ledit dispositif de mesure fournissant des valeurs du paramètre avant et / ou après le filtre.

2. Dispositif selon la revendication 1, dans lequel le biofiltre comprend du sable ou un autre matériau poreux ; les biofiltres sont normalement des filtres mono média ou des filtres de média multiples comprenant p.ex. une couche de sable et une couche de p.ex. anthracite, ou un filtre à média mélangés, ou le biofiltre comprend d'autres média poreux au lieu de sable, tel que p.ex. le charbon actif granulaire (GAC), l'argile étendu, le calcaire, le charbon d'anthracite ou d'autres matériaux filtrant, c'est-à-dire des particules similaires d'origine naturelle ou humaine, en outre le matériau ou lit filtrant peut soit être immergé soit non pas immergé.

3. Dispositif selon la revendication 1 ou 2, dans lequel le contact entre l'eau traversant et la source d'oligo-élément(s) provoque la libération d'oligo-élément(s) à partir de la source d'oligo-élément(s), et / ou au moins une source d'oligo-élément(s) est une électrode d'un système d'électrolyse.

4. Dispositif selon l'une quelconque des revendications précédentes, dans lequel au moins deux sources solides d'oligo-élément(s) sont des électrodes d'un système d'électrolyse.

5. Dispositif selon l'une quelconque des revendications précédentes, dans lequel la ou les électrodes métalliques sont constituées de Cu et / ou de Zn ou d'un alliage comprenant à la fois du Cu et du Zn, p. ex. laiton ou bronze.

6. Dispositif selon l'une quelconque des revendications précédentes, dans lequel le dispositif de dosage (13) est positionné en amont dans une direction d'écoulement obtenue lors de la restauration ou du lavage à contre-courant du filtre (1).

7. Dispositif selon l'une quelconque des revendications précédentes, dans lequel la source d'oligo-élément(s) est un métal ou un alliage constitué de métaux, par ex. laiton ou bronze.

8. Dispositif selon l'une quelconque des revendications précédentes, dans lequel le dispositif de dosage est configuré pour doser le ou les oligo-éléments de sorte que le contenu en amont du matériau filtrant (4) ou en aval du matériau filtrant (4) se situe dans la plage de 0,005 - 500 µg Cu par litre, alternativement 0,05 - 100 µg Cu par litre et / ou 0,005 - 25 µg Co par litre, alternativement 0,05 - 10 µg Co par litre et / ou 0,005 - 100 µg Cr par litre, alternativement 0,05 - 20 µg Cr par litre et / ou 0,005 - 100 µg Mo par litre, alternativement 0,05 - 20 µg Mo par litre et / ou 0,005 - 100 µg Ni par litre, alternativement 0,05 - 10 µg Ni par litre et / ou 0,005 - 25 µg W par litre, alternativement 0,05 - 20 µg W par litre et / ou 0,005 - 500 µg Zn par litre, alternativement 0,05 - 100 µg Zn par litre.

9. Dispositif selon l'une quelconque des revendications précédentes, dans lequel le paramètre est la teneur en oxygène ou la teneur en un composant à éliminer par les microorganismes tel que l'ammonium.

10. Dispositif selon l'une quelconque des revendications précédentes, dans lequel le dispositif de dosage est configuré pour délivrer un dosage continu ou un dosage discontinu d'un oligo-élément donné ou d'une combinaison d'oligo-éléments.

11. Dispositif selon l'une quelconque des revendications précédentes, comprenant une unité d'aération augmentant la teneur en oxygène de l'eau soit avant, soit à l'intérieur du filtre (1).

12. Procédé de traitement d'eau brute par activité microbienne dans un dispositif selon l'une quelconque des revendications 1-11, comprenant les étapes suivantes :
- la fourniture d'un biofiltre en contact avec un flux d'eau s'étendant entre une entrée (2) et une sortie (3), le biofiltre comprenant un matériau filtrant poreux portant la biomasse (4) ;
- la fourniture d'un dispositif de dosage d'oligo-éléments configuré pour doser un nutriment à des micro-organismes du biofiltre sous la forme d'une structure solide immergée dans l'eau ou débordée par l'eau, le dispositif de dosage étant configuré pour doser un oligo-élément en métal, par ex. Cu ou Co ou Cr ou Mo ou Ni ou W ou Zn ou une combinaison de ces éléments à l'eau en amont du matériau filtrant (4).

13. Procédé selon la revendication 12, dans lequel le dosage d'oligo-élément(s) est continu ou discontinu.

14. Procédé selon l'une quelconque des revendications 12 ou 13, dans lequel la quantité d'oligo-éléments libérée dans l'eau est commandée par électrolyse comprenant au moins une première électrode constituée d'au moins un ou plusieurs oligo-éléments et d'au moins une deuxième électrode constituée soit d'un ou de plusieurs oligo-éléments soit d'un matériau ne libérant pas d'ions dans l'eau.

15. Procédé selon la revendication 14, dans lequel
- un paramètre correspondant au contenu d'un ou plusieurs oligo-éléments est mesuré avant et / ou après le filtre.

16. Procédé selon l'une quelconque des revendications 12 à 14, dans lequel
- un paramètre correspondant à l'activité microbienne est mesuré après le filtre.

17. Procédé selon la revendication 16, dans lequel le paramètre est la teneur en oxygène dans l'eau ou la teneur en un composant à éliminer par les microorganismes à partir de l'eau tel que l'ammonium.

18. Procédé selon l'une quelconque des revendications 15 à 17, dans lequel un signal (6) correspondant à un ou plusieurs paramètres mesurés est fourni à une unité de commande (8), laquelle unité de commande fournit un signal adaptant le courant / la tension sur les électrodes.

19. Procédé selon l'une quelconque des revendications 12 à 18, dans lequel le courant envoyé aux électrodes est inversé soit régulièrement pendant des périodes prédéterminées, soit sur indication, par exemple, que la teneur en oxygène de l'eau est supérieure à une valeur donnée.
